# EUROPÄISCHE PATENTSCHRIFT

(11) **EP 1 254 015 B1**
(45) Veröffentlichungstag und Bekanntmachung des Hinweises auf die Patenterteilung: **10.09.2003**
(21) Anmeldenummer: 01909533.0
(22) Anmeldetag: 24.01.2001
(51) Int. Cl.: B29C 49/42, B65G 47/84

(54) **VERFAHREN UND VORRICHTUNG ZUM TRANSPORT VON TRAGELEMENTEN**
METHOD AND DEVICE FOR CONVEYING SUPPORTING ELEMENTS
PROCEDE ET DISPOSITIF DE TRANSPORT D'ELEMENTS DE SUPPORT

(30) Priorität: 09.02.2000 DE 10005687
(43) Veröffentlichungstag der Anmeldung: 06.11.2002
(73) Patentinhaber: SIG Corpoplast GmbH & Co. KG, 22145 Hamburg (DE)
(72) Erfinder: MÜLLER, Hartwig, 22952 Lütjensee (DE)
(74) Vertreter: Klickow, Hans-Henning
(86) Internationale Anmeldenummer: DE0100327
(87) Internationale Veröffentlichungsnummer: WO01058671

(56) Entgegenhaltungen:
- WO-A-97/13632
- DE-A- 19 727 278
- US-A- 4 214 860

## Beschreibung

Die Erfindung betrifft ein Verfahren zum Transport von Tragelementen innerhalb einer Einrichtung zur Blasformung von Behältern aus einem thermoplastischen Material, mittels derer Behälter durch Blasdruckeinwirkung aus einem temperierten Vorformling hergestellt werden und bei der eine Behälterkontur von mindestens zwei Blasformsegmenten innerhalb einer Blasstation vorgegeben wird, und bei dem zu einem Materialtransport mindestens entlang eines Teiles eines zu durchlaufenden Transportweges das thermoplastische Material von dem Tragelement gehaltert wird und bei dem das Tragelement lösbar mit einem Kopplungselement verbunden wird.

Die Erfindung betrifft darüber hinaus eine Vorrichtung zum Transport von Tragelementen innerhalb einer Einrichtung zur Blasformung von Behältern aus einem thermoplastischen Material, die mindestens eine Blasstation mit mindestens einer Blasform aufweist, die aus mindestens zwei von Trägern gehalterten Blasformsegmenten ausgebildet ist sowie bei der die Tragelemente das thermoplastische Material mindestens entlang eines Teiles eines zu durchlaufenden Transportweges haltern und die mindestens ein Kopplungselement zur lösbaren Halterung der Tragelemente aufweist.

Bei einer derartigen Behälterformung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung bei einer Blasdruckeinwirkung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Vorrichtung zur Blasformung von kunststoffbehältern mit Trageelementen für die Vorformlinge wird im Dokument US-A-4 214 860 offenbart.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Bei der Verwendung von Tragelementen für die Vorformlinge beziehungsweise für die geblasenen Behälter sind unterschiedliche Anforderungen zu erfüllen. Zum einen ist es erforderlich, bei einer Übergabe der Tragelemente von einer Transporteinrichtung zu einer anderen Transporteinrichtung eine sichere Halterung der Tragelemente zu gewährleisten. Darüber hinaus muß erreicht werden, daß jeweils nur ein Transportelement ein jeweiliges Tragelement arretiert, damit Blockierungen vermieden werden. Schließlich ist auch dafür zu sorgen, daß eine raumsparende Handhabung unterstützt wird und daß möglichst einfach gestaltete Bauelemente bereitgestellt werden.

Aufgabe der vorliegenden Erfindung ist es daher, ein Verfahren der einleitend genannten Art derart zu verbessern, daß sowohl eine zuverlässige Übergabe der Tragelemente erreicht als auch eine zuverlässige Handhabung gewährleistet wird.

Diese Aufgabe wird erfindungsgemäß dadurch gelöst, daß die lösbare Verbindung zwischen dem Tragelement und dem Kopplungselement derart erzeugt wird, daß mindestens ein federelastisch gelagertes Halteelement des Kopplungselementes vom Tragelement aus einer Ruhelage heraus auslenkbar ist und nach einem Einführen des Tragelementes in eine Halterungsaufnahme des Kopplungselementes aufgrund der federelastischen Lagerung in die Ruhelage zurückkehrt.

Weitere Aufgabe der Erfindung ist es, eine Vorrichtung der einleitend genannten Art derart zu konstruieren, daß eine Verbindung zwischen dem Tragelement und dem Kopplungselement leicht herstellbar und vorgebbar wieder trennbar ist.

Diese Aufgabe wird erfindungsgemäß dadurch gelöst, daß das Kopplungselement mindestens ein federelastisches Halteelement aufweist, das mindestens bereichsweise eine Halterungsaufnahme des Kopplungselementes begrenzt und das relativ zu einem Grundkörper des Kopplungselementes von einem Schwenkgelenk gelagert ist, das relativ zu einer Einführungsflanke des Halteelementes einen seitlichen Versatz aufweist.

Durch die federelastische Lagerung des Halteelementes sowie die Auslenkbarkeit des Halteelementes bei einem Einführen des Tragelementes ist es möglich, einen Übergabevorgang in einfacher Weise durchzuführen und eine automatische Halterung des Tragelementes nach einer Beendigung des Einführvorganges in das Kopplungselement zu gewährleisten. Die vorgeschlagene Anordnung des Schwenkgelenkes zwischen dem Halteelement und dem Grundkörper des Kopplungselementes führt dazu, daß bei einem Einführen des Tragelementes in die Halterungsaufnahme des Kopplungselementes hinein eine Öffnungsbewegung des Halteelementes gewährleistet ist.

Eine Einführung des Tragelementes in die Halterungsaufnahme des Kopplungselementes wird dadurch unterstützt, daß das Halteelement bei einer Beaufschlagung durch das Tragelement aus der Halterungsaufnahme heraus mit einer Kraftkomponente in Richtung auf die Positionierung in der Ruhelage beaufschlagt wird.

Zur Vermeidung von Reibung und zur Minimierung eines eventuellen Verschleißes wird vorgeschlagen, daß bei einer Einführung des Tragelementes in das Kopplungselement eine Rollbewegung einer Führungsrolle in eine öffnungsbewegung des Halteelementes transformiert wird.

Zur Unterstützung eines Transportes der Tragelemente mit hoher Geschwindigkeit wird vorgeschlagen, daß das Kopplungselement gemeinsam mit einer Übergabeeinrichtung auf einem geschlossenen Transportweg bewegt wird.

Eine Verwendung spezieller Leiteinrichtungen für die Tragelemente kann dadurch vermieden werden, daß das Kopplungselement gemeinsam mit einem rotierenden Blasrad bewegt wird.

Eine bevorzugte Anwendung besteht darin, daß das Kopplungselement relativ zu einer Blasstation mit mindestens zwei Kavitäten zur Behälterformung positioniert wird.

Zur Unterstützung eines geschlossenen Umlaufweges für die Tragelemente wird vorgeschlagen, daß im Bereich von in einer Transportrichtung nacheinander folgenden Übergabeeinrichtungen abwechselnd Kopplungselemente unterschiedlicher Gestaltung derart verwendet werden, daß im Bereich der einen Kopplungselemente die Tragelemente gegen ein Herausziehen aus der Halterungsaufnahme gesichert gehaltert werden und daß im Bereich der anderen Kopplungselemente ab einer definierten Krafteinwirkung ein Herausziehen der Tragelemente aus der Halterungsaufnahme durchgeführt wird.

Eine Handhabung von Behältern mit einer Querschnittgestaltung, die nicht rotationssymmetrisch ausgebildet ist, wird dadurch unterstützt, daß im Bereich mindestens eines Kopplungselementes eine Halterung der Tragelemente derart erfolgt, daß eine Positionsänderung aufeinanderfolgender Tragelemente relativ zueinander ermöglicht wird.

Eine unbeabsichtigte Verdrehung der Tragelemente relativ zu den Kopplungselementen kann dadurch vermieden werden, daß innerhalb einer Halterungsaufnahme der Kopplungselemente die Tragelemente gegenüber einem verdrehen gesichert angeordnet werden.

Eine zuverlässige Realisierung der federelastischen Beaufschlagung des Halteelementes besteht darin, daß das Halteelement von einer Druckfeder federelastisch beaufschlagt ist.

Zur Vermeidung von Querdurchbiegungen der Druckfeder wird vorgeschlagen, daß die Druckfeder innerhalb einer Führung angeordnet ist.

Eine leichte und zugleich hochbelastbare Ausführungsform wird dadurch bereitgestellt, daß das Halteelement als ein relativ zum Grundkörper verschwenkbar angeordneter Arm ausgebildet ist.

Eine hohe Betriebssicherheit wird dadurch unterstützt, daß der seitliche Versatz des Schwenkgelenkes relativ zur Einführungsflanke des Halteelementes derart gewählt ist, daß bei einer Zugbeaufschlagung eines innerhalb des Kopplungselementes gehalterten Tragelementes eine Kraftbeaufschlagung des Halteelementes derart vorgegeben ist, daß eine das Halteelement in die Verschlußpositionierung drückende Kraftkomponente realisiert ist.

Eine hochgenaue und reproduzierbare Vorgabe der Bewegunsgabläufe erfolgt dadurch, daß für eine Positionierung des Halteelementes relativ zum Grundkörper eine Kurvensteuerung vorgesehen ist.

Zur Vermeidung eines Verkippens der Tragelemente sowie zur weiteren Erhöhung der Betriebssicherheit wird vorgeschlagen, daß das Kopplungselement mit mindestens zwei verschwenkbar gelagerten Halteelementen ausgestattet ist.

Eine hochbelastbare Halterung der Tragelemente wird dadurch unterstützt, daß die Halteelemente in vertikaler Richtung übereinander und mit einem Abstand relativ zueinander angeordnet sind.

Gemäß einer weiteren Ausführungsform ist vorgesehen, daß die Halteelemente mit ihren jeweiligen Einführflanken auf einander gegenüberliegenden Seiten der Halterungsaufnahme angeordnet sind.

Zur Bereitstellung eines exakt definierten Bewegungsbereiches wird vorgeschlagen, daß das Halteelement zur Vorgabe einer Endlage einen Anschlag aufweist.

Eine weitere Veränderung von auftretenden Reibungen kann dadurch erfolgen, daß die Druckfeder von einer Kappe abgedeckt ist, die in Richtung einer Längsachse der Druckfeder verschieblich angeordnet ist und die eine mit dem Halteelement verbundene Umlenkrolle beaufschlagt.

Zur Aufnahme einer Gewichtskraft des Tragelementes wird vorgeschlagen, daß der Grundkörper im Bereich der Halterungsaufnahme zur Längsfixierung des Tragelementes ein Aufnahmeprofil aufweist.

In der Zeichnung sind Ausführungsbeispiele der Erfindung schematisch dargestellt. Es zeigen:
- Fig. 1:: Eine perspektivische Darstellung einer Blasstation zur Herstellung von Behältern aus Vorformlingen,
- Fig. 2:: einen Längsschnitt durch eine Blasform, in der ein Vorformling gereckt und expandiert wird,
- Fig. 3:: eine Skizze zur Veranschaulichung eines grundsätzlichen Aufbaus einer Vorrichtung zur Blasformung von Behältern,
- Fig. 4:: eine Seitenansicht eines Kopplungselementes mit zwei übereinander angeordneten und federelastisch gelagerten Halteelementen,
- Fig. 5:: eine teilweise geschnittene Draufsicht gemäß Blickrichtung V in Fig. 4,
- Fig. 6:: eine Ansicht des Kopplungselementes gemäß Blickrichtung VI in Fig. 4,
- Fig. 7:: einen Horizontalschnitt gemäß Schnittlinie VII-VII in Fig. 6,
- Fig. 8:: eine Seitenansicht eines Kopplungselementes mit zwei relativ zueinander gegenüberliegend angeordneten und federelastisch gelagerten Halteelementen,
- Fig. 9:: einen Horizontalschnitt gemäß Schnittlinie IX-IX in Fig. 8,
- Fig. 10:: eine Prinzipdarstellung einer Vielzahl von Übergaberädern, die mit Kopplungselementen zur Halterung von Tragelementen ausgestattet sind, in Kombination mit einem Blasrad, das Blasstationen trägt, die mit Mehrfachkavitäten ausgestattet sind,
- Fig. 11:: eine Detaildarstellung der Anordnung gemäß Fig. 10 im Bereich einer Entnahme von geblasenen Behältern aus einer Blasstation
und
- Fig. 12:: eine Detaildarstellung der Anordnung gemäß Fig. 10 im Bereich einer Übergabe der geblasenen Behälter vom Entnahmerad auf ein Kopplungsrad.

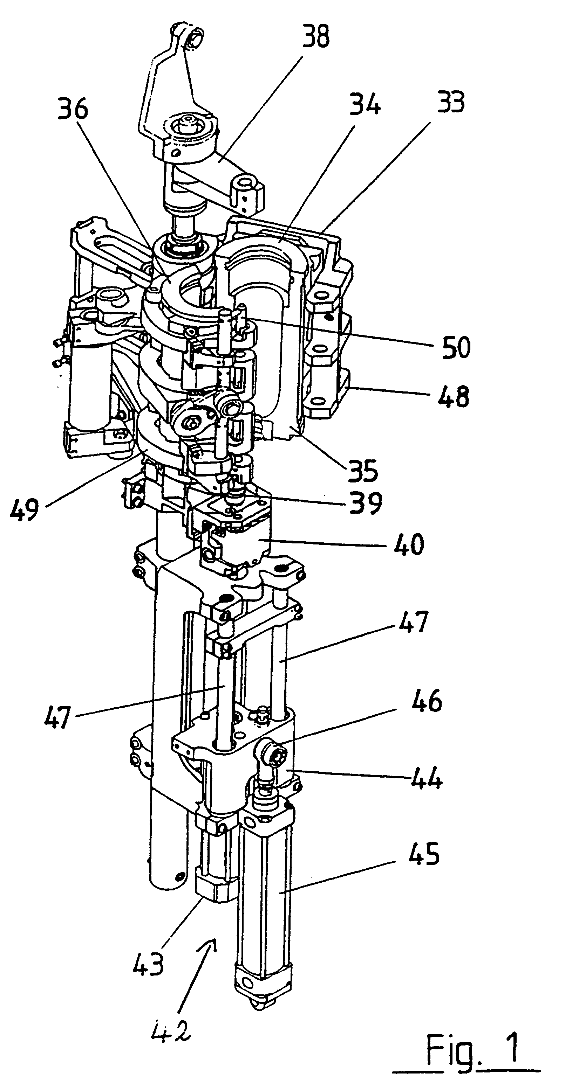

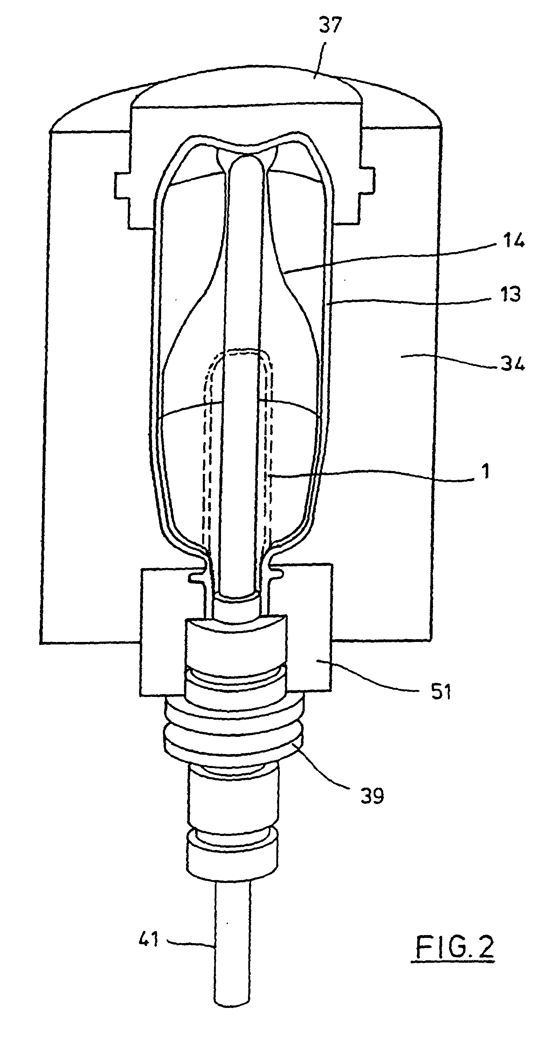

Der prinzipielle Aufbau einer Vorrichtung zur Umformung von Vorformlingen (1) in Behälter (13) ist in Fig. 1 und in Fig. 2 dargestellt.

Die Vorrichtung zur Formung des Behälters (13) besteht im wesentlichen aus einer Blasstation (33), die mit einer Blasform (34) versehen ist, in die ein Vorformling (1) einsetzbar ist. Der Vorformling (1) kann ein spritzgegossenes Teil aus Polyäthylenterephthalat sein. Zur Ermöglichung eines Einsetzens des Vorformlings (1) in die Blasform (34) und zur Ermöglichung eines Herausnehmens des fertigen Behälters besteht die Blasform (34) aus Formhälften (35,36) und einem Bodenteil (37), der von einer Hubvorrichtung (38) positionierbar ist. Der Vorformling (1) kann im Bereich der Blasstation (33) von einem Tragelement (39) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (34) einzusetzen.

Zur Ermöglichung einer Druckluftzuleitung ist unterhalb des Tragelement (39) ein Anschlußkolben (40) angeordnet, der dem Vorformling (1) Druckluft zuführt und gleichzeitig eine Abdichtung relativ zum Tragelement (39) vornimmt. Bei einer abgewandelten Konstruktion ist es grundsätzlich aber auch denkbar, feste Druckluftzuleitungen zu verwenden.

Eine Reckung des Vorformlings (1) erfolgt mit Hilfe einer Reckstange (41), die von einem Zylinder (42) positioniert wird. Grundsätzlich ist es aber auch denkbar, eine mechanische Positionierung der Reckstange (41) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (33) auf einem rotierenden Blasrad angeordnet sind. Eine Verwendung von Zylindern (42) ist zweckmäßig, wenn ortsfest angeordnete Blasstationen (33) vorgesehen sind.

Bei der in Fig. 1 dargestellten Ausführungsform ist das Recksystem derart ausgebildet, daß eine Tandem-Anordnung von zwei Zylindern (42) bereitgestellt ist. Von einem Primärzylinder (43) wird die Reckstange (41) zunächst vor Beginn des eigentlichen Reckvorganges bis in den Bereich des Bodens (7) des Vorformlings (1) gefahren. während des eigentlichen Reckvorganges wird der Primärzylinder (43) mit ausgefahrener Reckstange gemeinsam mit einem den Primärzylinder (43) tragenden Schlitten (44) von einem Sekundärzylinder (45) oder über eine Kurvensteuerung positioniert. Insbesondere ist daran gedacht, den Sekundärzylinder (45) derart kurvengesteuert einzusetzen, daß von einer Führungsrolle (46), die während der Durchführung des Reckvorganges an einer Kurvenbahn entlang gleitet, eine aktuelle Reckposition vorgegeben wird. Die Führungsrolle (46) wird vom Sekundärzylinder (45) gegen die Führungsbahn gedrückt. Der Schlitten (44) gleitet entlang von zwei Führungselementen (47).

Nach einem Schließen der im Bereich von Trägern (48,49) angeordneten Formhälften (35,36) erfolgt eine Verriegelung der Träger (48, 49) relativ zueinander mit Hilfe einer Verriegelungseinrichtung (50).

Zur Anpassung an unterschiedliche Formen des Mündungsabschnittes (2) ist gemäß Fig. 2 die Verwendung separater Gewindeeinsätze (51) im Bereich der Blasform (34) vorgesehen.

Fig. 2 zeigt zusätzlich zum geblasenen Behälter (13) auch gestrichelt eingezeichnet den Vorformling (1) und schematisch eine sich entwickelnde Behälterblase (14).

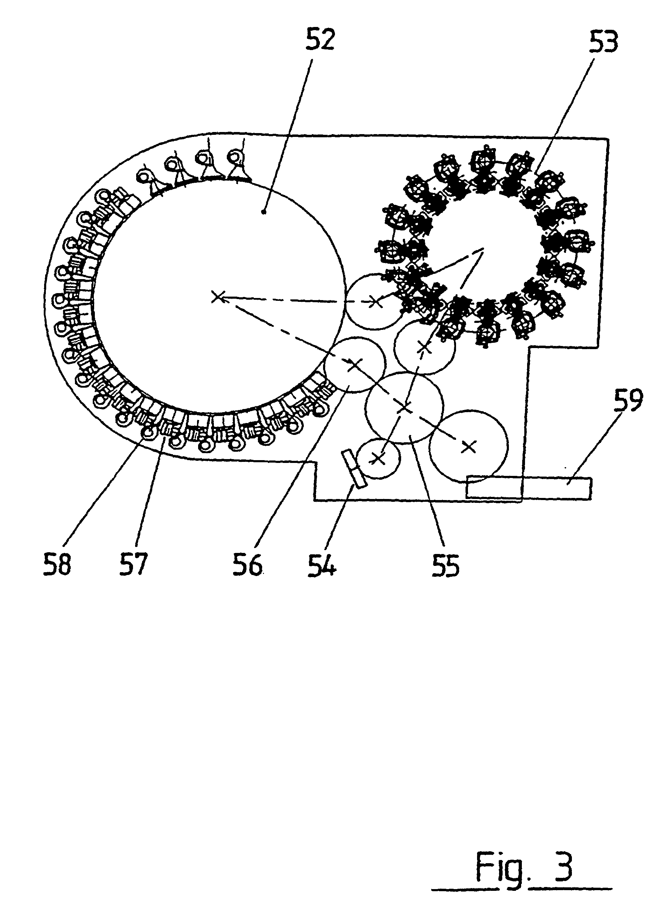

Fig. 3 zeigt den grundsätzlichen Aufbau einer Blasmaschine, die mit einer als rotierendes Heizrad ausgebildeten Heizeinrichtung (52) sowie mit einem rotierenden Blasrad (53) versehen ist. Ausgehend von einer Vorformlingseingabe (54) werden die Vorformlinge (1) von Übergaberädern (55,56) in den Bereich des Heizrades (52) transportiert. Entlang des Heizrades (52) sind Heizstrahler (57) sowie Gebläse (58) angeordnet, um die Vorformlinge (1) zu temperieren. Nach einer ausreichenden Temperierung der Vorformlinge (1) werden diese an das Blasrad (53) übergeben, in dessen Bereich die Blasstationen (33) angeordnet sind. Die fertig geblasenen Behälter (13) werden von weiteren Übergaberädern einer Ausgabestrecke (59) zugeführt.

Um einen Vorformling (1) derart in einen Behälter (13) umformen zu können, daß der Behälter (13) Materialeigenschaften aufweist, die eine lange Verwendungsfähigkeit von innerhalb des Behälters (13) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

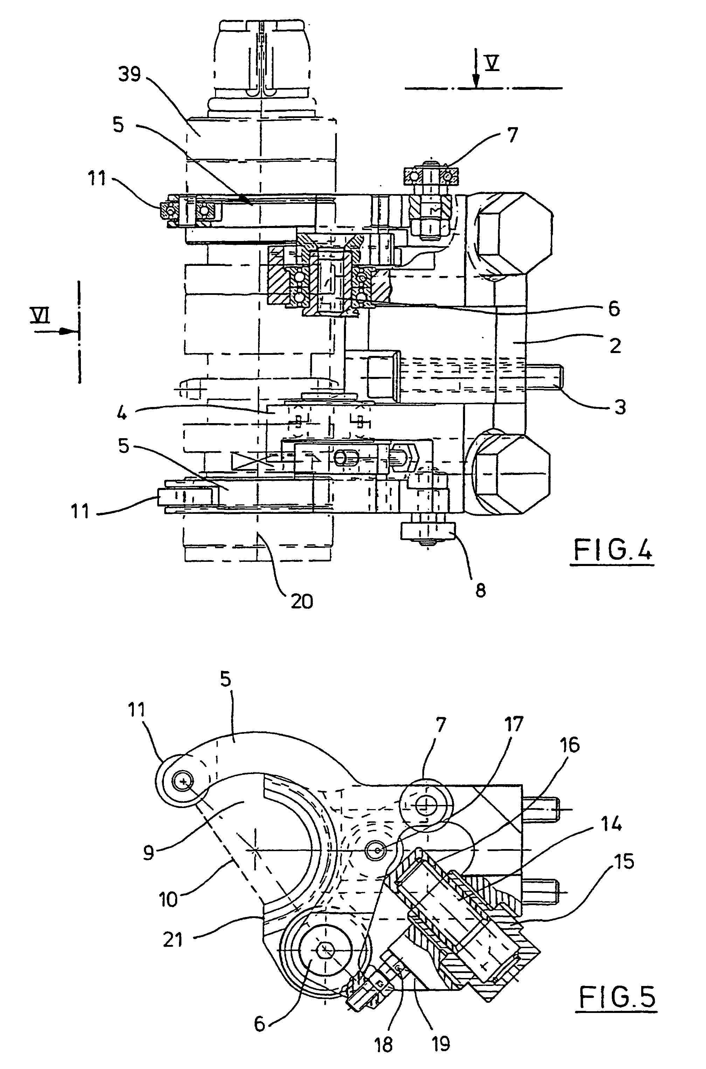

Fig. 4 zeigt in einer Seitenansicht die Halterung des Tragelementes (39) durch ein Kopplungselement (2). Das Kopplungselement (2) kann über Verbindungsteile (3) mit einer jeweiligen Transporteinrichtung gekoppelt werden. Das Kopplungselement (2) besteht im wesentlichen aus einem Grundkörper (4) sowie mindestens einem Halteelement (5). Das Halteelement (5) ist über mindestens ein Schwenkgelenk (6) drehbeweglich mit dem Grundkörper (4) verbunden.

Eine Positionierung des Halteelementes (5) relativ zum Grundkörper (4) kann über Positionierrollen (7, 8) durchgeführt werden, die ihrerseits von Kurvenbahnen oder Kurvensegmenten positioniert werden.

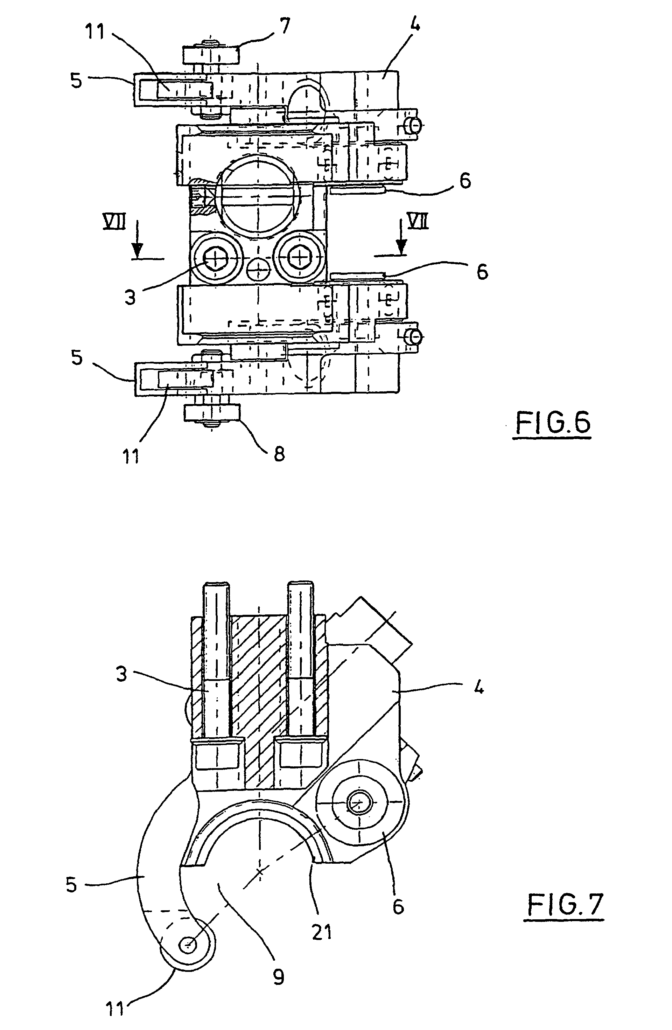

Die Anordnung der Positionierrollen (7, 8) relativ zum Schwenkgelenk (6) wird durch die Draufsicht in Fig. 5 weiter veranschaulicht. Insbesondere ist auch erkennbar, daß das Halteelement (5) klauenartig eine Halterungsaufnahme (9) des Kopplungselementes (2) bereichsweise begrenzt. Für ein Einführen und ein Entnehmen des Tragelementes (39) ist die Halterungsaufnahme (9) mit einer Handhabungsausnehmung (10) versehen. Zur Erleichterung eines Einführens des Tragelementes (39) in die Handhabungsausnehmung (10) ist das Halteelement (5) entlang einer Begrenzung der Handhabungsausnehmung (10) mit mindestens einer Führungsrolle (11) versehen.

Bei einem Einführen des Tragelementes (39) in die Handhabungsausnehmung (10) wird das Halteelement (5) durch einen Kontakt zwischen dem Tragelement (39) und der Führungsrolle (11) um das Schwenkgelenk (6) gedreht.

Zur Gewährleistung einer definierten Positionierung des Halteelementes (5) bei einer Fixierung des Tragelementes (39) wird das Halteelement (5) federnd relativ zum Grundkörper (4) verspannt. Hierzu wird vorzugsweise eine Druckfeder (14) verwendet, die in eine Führungseinrichtung eingesetzt ist. Die Führungseinrichtung besteht aus einem starr mit dem Grundkörper (4) verbundenen Basiselement (15) sowie einer Kappe (16). Die Kappe (16) ist relativ zum Basiselement (15) verschieblich geführt. Hierdurch wird die Kappe (16) aufgrund der Krafteinwirkung der Druckfeder (14) gegen das Halteelement gedrückt.

Zur Gewährleistung einer leichtgängigen Positionierbarkeit ist das Halteelement (5) im Kontaktbereich mit der Kappe (16) mit einer Umlenkrolle (17) versehen. Bei einer Relativbewegung zwischen dem Halteelement (5) und der Kappe (16) rollt die Umlenkrolle (17) hierdurch auf eine Abschlußfläche der Kappe (16) ab.

Eine Endlage des Halteelementes (5) bei einer Halterung des Tragelementes (39) wird durch einen Anschlag (18) festgelegt, der gegen eine Anschlagfläche (19) des Grundkörpers (4) geführt ist. Insbesondere ist daran gedacht, zur Unterstützung einer Einstellbarkeit der Positionierung des Halteelementes (5) den Anschlag (18) relativ zum Halteelement (5) einstellbar anzuordnen. Dies kann beispielsweise durch eine Führung eines Gewindeschaftes in einer zugeordneten Bohrung erfolgen.

Zur Ermöglichung einer Fixierung des Tragelementes (39) in Richtung einer Längsachse (20) weist der Grundkörper (4) im Bereich der Halterungsaufnahme (9) ein Aufnahmeprofil (21) auf, in das das Tragelement (39) mit einer korrespondierenden Gegenprofilierung einführbar ist.

Die Anordnung der Führungsrolle (11) sowie die Gestaltung des Grundkörpers (4) im Bereich der Handhabungsausnehmung (10) gegenüberliegend zur Führungsrolle (11) ist derart gewählt, daß bei einer Beaufschlagung eines innerhalb der Halterungsaufnahme (9) angeordneten Tragelementes (39) mit einer Zugkraft das Halteelement (5) mit einer in Richtung auf das Tragelement (39) wirkenden Kraftkomponente beaufschlagt wird. Hierdurch wird sicher vermieden, daß das Tragelement (39) aus der Halterungsaufnahme (9) herausgezogen werden kann. Eine Entnahme des Tragelementes (39) aus der Halterungsaufnahme (9) ist nur möglich, wenn das Halteelement (5) aktiv durch eine entsprechende Beaufschlagung der Positionierrollen (7, 8) in eine Öffnungspositionierung überführt wird.

Aus der Darstellung in Fig. 6 ist erkennbar, daß der Grundkörper (4) mit zwei separaten Halteelementen (5) versehen ist, die jeweils unabhängig voneinander über ein Schwenkgelenk (6) drehbeweglich mit dem Grundkörper (4) verbunden sind. Hierdurch kann eine erhöhte Betriebssicherheit erreicht werden, da jedem Halteelement (5) unabhängig voneinander eine federnde Verspannung relativ zum Grundkörper (4) zugeordnet werden kann.

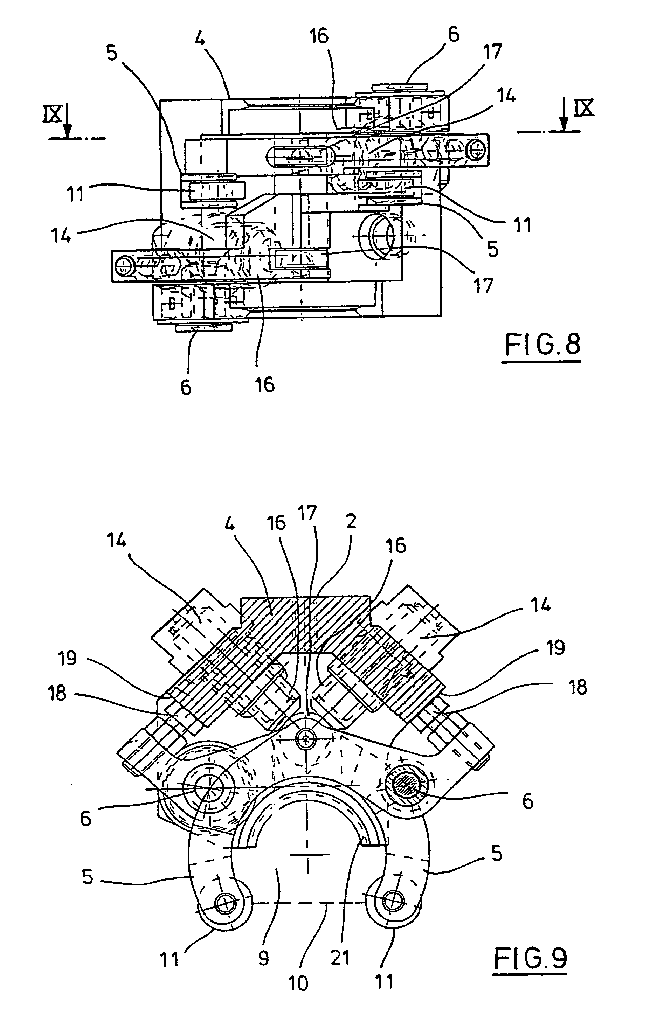

In Fig. 8 und Fig. 9 ist eine andere Ausführungsform des Kopplungselementes (2) dargestellt. Bei dieser Ausführungsform werden zwei Halteelemente (5) derart angeordnet, daß bezüglich der Halterungsaufnahme (9) eine gegenüberliegende Positionierung vorliegt. Die im Bereich der Handhabungsausnehmung (10) angeordneten Enden der Halteelemente (5) können auch bei dieser Ausführungsform mit Führungsrollen (11) versehen werden. Grundsätzlich ist es auch denkbar, jeweils Paare von Halteelementen (5) auf unterschiedlichen Ebenen anzuordnen und hierdurch ähnlich wie in der Ausführungsform gemäß Fig. 4 bis Fig. 7 eine Halterung und Fixierung der Tragelemente (39) auf unterschiedlichen Höhenlagen durchzuführen.

Bei der Ausführungsform gemäß Fig. 8 und Fig. 9 ist jedem der Halteelemente (5) eine separate federnde Verspannung relativ zum Grundkörper (4) zugeordnet. Ähnlich wie gemäß der bereits erläuterten Ausführungsform können auch hier Druckfedern (14) in entsprechenden Führungen positioniert und mit Kappen (16) versehen werden, die von Umlenkrollen (17) beaufschlagt sind. Die Anordnung der Druckfedern (14) und der Umlenkrollen (17) erfolgt zweckmäßigerweise auf unterschiedlichen Höhenniveaus, damit eine entkoppelte Beaufschlagung der einzelnen Halteelemente (5) möglich ist. Jedem der Halteelemente (5) ist somit ein separates Schwenkgelenk (6), eine separate Führungsrolle (11) sowie eine separate Umlenkrolle (17) zugeordnet.

zusätzlich ist vorgesehen, jedes der Halteelemente (5) zur Endlagenfestlegung mit einem Anschlag (18) zu versehen, der eine zugeordnete Anschlagfläche (19) beaufschlagt.

Bei der Durchführung von Übergaben der Tragelemente (39) von einem Kopplungselement (2) zu einem anderen Kopplungselement (2) werden vorzugsweise abwechselnd Kopplungselemente (2) entsprechend der Ausführungsform in Fig. 4 bis Fig. 7 und der Ausführungsform in Fig. 8 und Fig. 9 eingesetzt. Hierdurch können eventuelle Blockierungen nach einem Stillstand der Blaseinrichtung sicher vermieden können, da die Kopplungselemente gemäß Fig. 8 und Fig. 9 die Tragelemente (39) bei entsprechender Kraftbelastung freigeben.

Grundsätzlich ist es aber auch möglich, beispielsweise eine Übergabe der Tragelemente (39) von einem Kopplungselement (2) gemäß Fig. 4 bis Fig. 7 zu einem gleichartigen Kopplungselement (2) durchzuführen. Bei einer derartigen Ausführungsform erweist es sich als zweckmäßig, wenn das jeweils die Tragelemente (39) aufnehmende Kopplungselement (2) eine mechanische Öffnungseinrichtung für das andere der Kopplungselemente (2) aufweist, um dessen Halteelemente (5) auseinanderzudrücken. Eine derartige mechanische Einrichtung kann in einfacher Weise als Zapfen oder andersartiger Vorsprung ausgebildet sein, der bei einer ausreichenden gegenseitigen Annäherung des aufnehmenden Kopplungselementes (2) und des abgebenden Kopplungselementes (2) die Öffnungsbewegung verursacht. Die Verwendung der mechanischen Öffnungseinrichtung ermöglicht eine beliebige Übergabe von Tragelementen (39) zwischen gleichartigen oder unterschiedlichen Kopplunselementen (2).

Durch eine derartige Realisierung mit direkt einwirkenden mechanischen Öffnungselementen ist es möglich, Positionierrollen (7, 8) für das eine der zusammenwirkenden Kopplungselemente (2) wegzulassen und hierdurch einen vereinfachten Aufbau zu erreichen. Alternativ zu der oben beschriebenen Ausführungsform ist es ebenfalls denkbar, eine kurvengesteuerte Öffnung des abgebenden Kopplungselementes (2) zu realisieren und dieses mit entsprechenden mechanischen Betätigungsmitteln zur Durchführung des aufnehmenden Kopplungselementes (2) zu versehen.

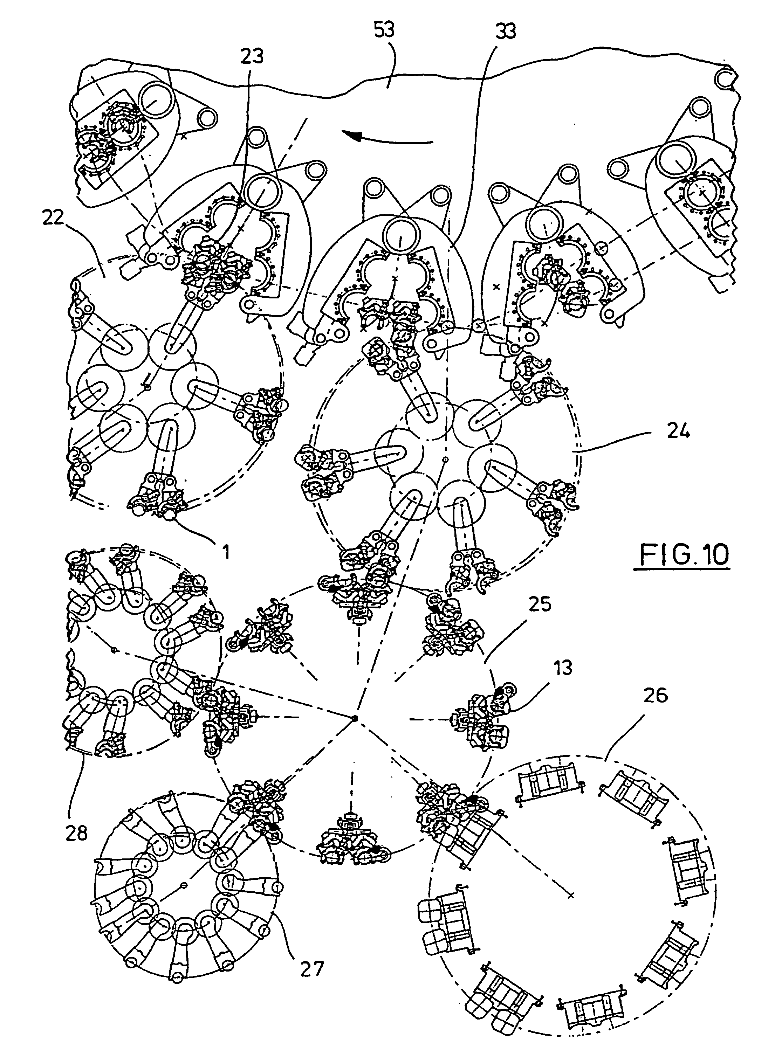

Fig. 10 zeigt eine teilweise Darstellung einer Vorrichtung zur Blasformung von Behältern (13) aus Vorformlingen (1), wobei im Bereich des Blasrades (53) Blasstationen (33) mit jeweils zwei Kavitäten zur Behälterformung angeordnet sind.

Eine Übergabe der zu blasenden Vorformlinge (1) an die Blasstationen (33) erfolgt von einer rotierenden Eingabeeinrichtung (22), die mit Tragarmen ausgestattet ist, an deren Enden Kopplungselemente (2) angeordnet sind. Die Kopplungselemente (2) im Bereich der Eingabeeinrichtung (22) weisen hierbei Halteelemente (5) auf, die die Tragelemente (39) gegenüber dem Grundkörper (4) verspannen, wie es in Fig. 4 bis Fig. 7 dargestellt ist. Im Bereich der Blasstationen (33) sind Kopplungselemente (2) angeordnet, die die Tragelemente (39) gemäß der Ausführungsform in Fig. 8 und Fig. 9 zwischen zwei Halteelementen (5) einspannen. Die Kopplungselemente (2) im Bereich der Blasstationen (33) sind darüber hinaus auf einer Positioniereinrichtung (23) angeordnet, die sowohl ein Verschwenken der Tragelemente (39) zur Einnahme einer Positionierung entsprechend der räumlichen Orientierung der Kavitäten ermöglichen als auch eine Abstandsveränderung der Tragelemente (39) derart durchführen, daß ein für die Blasverformung erforderlicher Abstand der Vorformlinge (1) vorliegt.

Nach einer Rotation des Blasrades (53) und einem Abschluß der Blasverformung der Vorformlinge (1) in die Behälter (13) werden die geblasenen Behälter (13) von einer Entnahmeeinrichtung (24) aus den Blasstationen (33) entnommen. Auch die Entnahmeeinrichtung (24) weist Tragarme auf, an deren Enden Kopplungselemente (5) positioniert sind. Die Kopplungselemente (5) der Entnahmeeinrichtung (24) entsprechen wieder der Ausführungsform in Fig. 4 bis Fig. 7.

Im Anschluß an einen Transport mit der Entnahmeeinrichtung (24) werden die geblasenen Behälter (33) von einer Übergabeeinrichtung (25) weiter transportiert, die wieder Kopplungselemente (2) entsprechend der Ausführungsform in Fig. 8 und Fig. 9 aufweist. Die Übergabeeinrichtung (25) transportiert die geblasenen Behälter (33) zu einer Ausgabeeinrichtung (26). Die Ausgabeeinrichtung (26) übernimmt lediglich die geblasenen Behälter (33), die Tragelemente (39) werden hingegen von der Übergabeeinrichtung (25) weiter transportiert und von einer Bestückungseinrichtung (27) erneut mit Vorformlingen (1) versehen. Die Übergabeeinrichtung (25) leitet die hierdurch wieder erneut mit Vorformlingen (1) bestückten Tragelementen (39) zunächst an eine Heizungseingabe (28) weiter, die eine Übergabe zu der in Fig. 10 nicht dargestellten Heizeinrichtung (52) durchführt. Die Heizeinrichtung (52) kann beispielsweise zum Transport der Vorformlinge (1) mit einem Heizrad oder mit einer kettenartigen Transporteinrichtung ausgestattet sein.

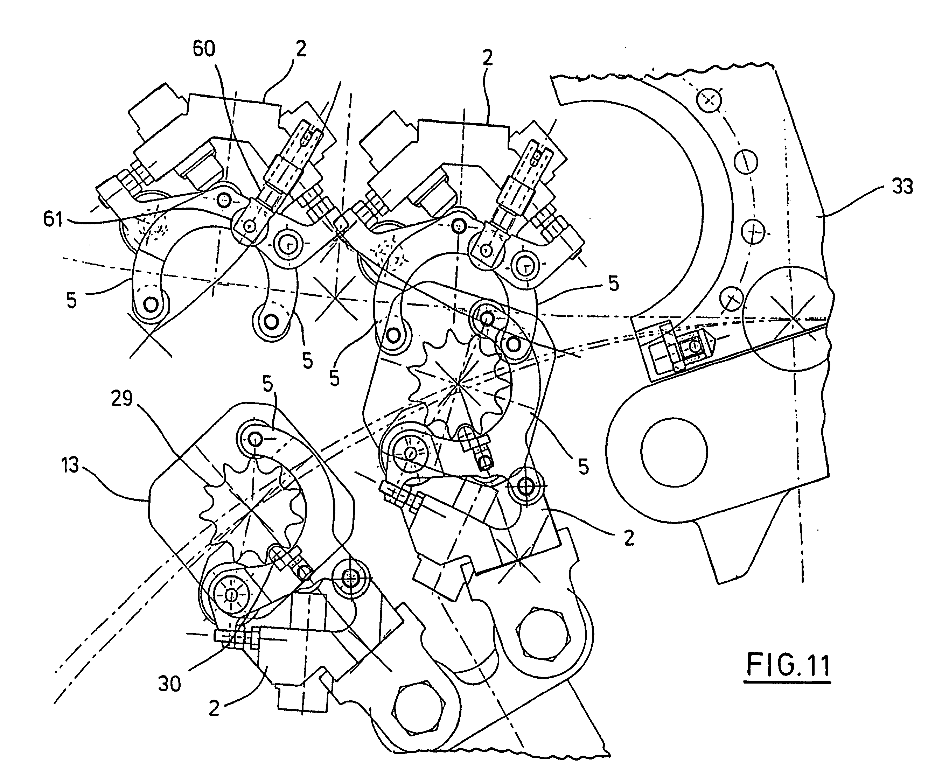

Fig. 11 zeigt einen Ausschnitt aus der Anordnung gemäß Fig. 10 im Bereich der Entnahme der geblasenen Behälter (13) aus der Blasstation (33). Erkennbar ist insbesondere, daß die Tragelemente (33) mit Positionierelementen (29) ausgestattet sind, die entlang eines äußeren Umfanges mit einem Profil, beispielsweise mit einer Verzahnung, versehen sind. Das Außenprofil des Positionierelementes (29) ermöglicht durch ein Zusammenwirken mit einer Rasteinrichtung (30), die beispielsweise als Vorsprung im Bereich des Kopplungselementes (2) angeordnet ist, die Beibehaltung einer definierten Rotationspositionierung des Tragelementes (39) und damit des geblasenen Behälters (13) bei einem Transport des Tragelementes (39). Dies ist insbesondere dann von Bedeutung, wenn Behälter (13) mit einer Kontur geblasen werden, die nicht rotationssymmetrisch gestaltet ist.

Eine weitere Möglichkeit besteht darin, beispielsweise bei einer Entladung von Blasstationen (33) mit Mehrfachkavitäten, eine relativ zueinander unterschiedliche räumliche Orientierung der geblasenen Behälter (13) durch eine Verschwenkung der Kopplungselemente (2) auszugleichen. Auch hierbei wird durch ein Zusammenwirken der Profilierung des Positionierlementes (29) und der Rasteinrichtung (30) für exakt reproduzierbare Bewegungsabläufe gesorgt.

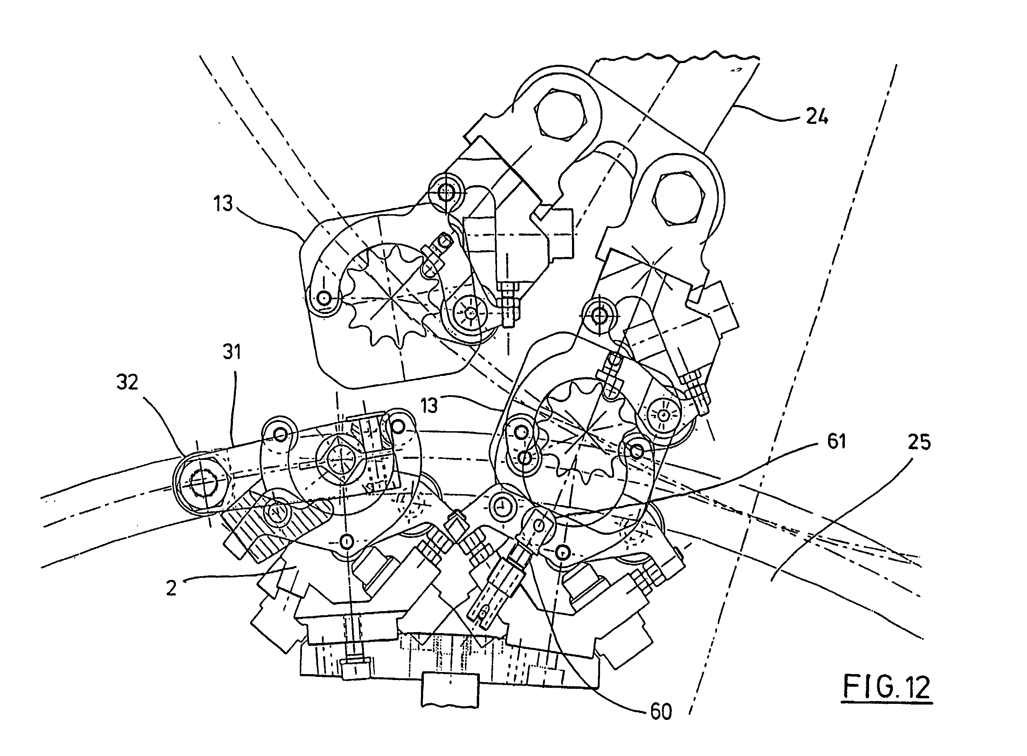

Eine Möglichkeit zur Durchführung einer Änderung der räumlichen Orientierung eines transportierten Tragelementes (39), der einen Behälter (13) transportiert, ist in Fig. 12 am Beispiel der Übergabeeinrichtung (25) dargestellt. Das Kopplungselement (2) ist hierbei mit einem Stellhebel (31) versehen, der von einer Kurvenrolle (32) verschwenkbar ist. Eine relativ zueinander ungleichmäßige räumliche Orientierung der Behälter (13) kann hierdurch während des Transportes im Bereich der Übergabeeinrichtung (25) bis zu einer Überleitung der Behälter (13) an die Ausgabeeinrichtung (26) ausgeglichen werden. Der entsprechende Positioniervorgang kann in der Darstellung gemäß Fig. 10 nachvollzogen werden.

Bei einem Vergleich insbesondere der Darstellung der Ausführungsform gemäß Fig. 6 mit der Ausführungsform gemäß Fig. 8 ist erkennbar, daß die jeweiligen Halteelemente (5) und die zugeordneten Führungsrollen (11) auf unterschiedlichen Höhenniveaus positioniert sind. Hierdurch ist gewährleistet, daß eine kollisionsfreie Übergabe der Tragelemente (39) von einem Kopplungselement (2) zum anderen Kopplungselement (2) möglich ist und trotzdem während jedes Zeitpunktes der Übergabe eine ausreichende Führung des Tragelementes (39) erfolgt.

In Fig. 11 und Fig. 12 sind zusätzlich zu den Rasteinrichtungen (30), die starr mit den jeweiligen Kopplungselementen (2) verbunden sind, weitere Rasteinrichtungen (60) vorgesehen, die eine nachgiebige federbelastete Arretierung der Tragelemente (39) ermöglichen. Der Einsatz der starren Rasteinrichtungen (30) und der federbelasteten Rasteinrichtungen (60) erfolgt dabei derart, daß jeweils bei der Übergabe der Tragelemente (39) zusammenwirkende Kopplungselemente (2) einerseits mit den starren Rasteinrichtungen (30) und andererseits mit den beweglichen Rasteinrichtungen (60) ausgestattet sind. Hierdurch werden Selbstblockierungen vermieden. Die beweglichen Rasteinrichtungen (60) sind vorzugsweise mit eine Rolle (61) ausgestattet, die einen Durchmesser aufweist, der etwas größer als ein Abstand von Profilierungsvorsprüngen des Positionierelementes (29) gewählt ist. Hierdurch ist es möglich, daß eine Abwälzbewegung des Positionierelementes (29) bei der Übergabe der Tragelemente (39) von einem Kopplungselelement (2) zum anderen Kopplungselement durchgeführt wird.

## Patentansprüche

1. Verfahren zum Transport von Tragelementen innerhalb einer Einrichtung zur Blasformung von Behältern (13) aus einem thermoplastischen Material, mittels derer Behälter durch Blasdruckeinwirkung aus einem temperierten vorformling (1) hergestellt werden und eine Behälterkontur von mindestens zwei Blasformsegmenten innerhalb einer Blasstation (33) vorgegeben wird, und bei dem zu einem Materialtransport mindestens entlang eines Teiles eines zu durchlaufenden Transportweges das thermoplastische Material von dem Tragelement gehaltert wird und bei dem das Tragelement lösbar mit einem Kopplungselement verbunden wird, **dadurch gekennzeichnet, daß** die lösbare Verbindung zwischen dem Tragelement (39) und dem Kopplungselement (2) derart erzeugt wird, daß mindestens ein federelastisch gelagertes Halteelement (5) des Kopplungselementes (2) vom Tragelement (39) aus einer Ruhelage heraus auslenkbar ist und nach einem Einführen des Tragelementes (39) in eine Halterungsaufnahme (9) des Kopplungselementes (2) aufgrund der federelastischen Lagerung in die Ruhelage zurückkehrt.

2. verfahren nach Anspruch 1, **dadurch gekennzeichnet, daß** das Halteelement (5) bei einer Beaufschlagung durch das Tragelement (39) aus der Halterungsaufnahme (9) heraus mit einer Kraftkomponente in Richtung auf die Positionierung in der Ruhelage beaufschlagt wird.

3. Verfahren nach Anspruch 1 oder 2, **dadurch gekennzeichnet, daß** bei einer Einführung des Tragelementes (39) in das Kopplungselement (2) eine Rollbewegung einer Führungsrolle (11) in eine Öffnungsbewegung des Halteelementes (5) transformiert wird.

4. Verfahren nach einem der Ansprüche 1 bis 3, **dadurch gekennzeichnet, daß** das Kopplungselement (2) gemeinsam mit einer Übergabeeinrichtung auf einem geschlossenen Transportweg bewegt wird.

5. Verfahren nach einem der Ansprüche 1 bis 4, **dadurch gekennzeichnet, daß** das Kopplungselement (2) gemeinsam mit einem rotierenden Blasrad (53) bewegt wird.

6. Verfahren nach einem der Ansprüche 1 bis 5, **dadurch gekennzeichnet, daß** das Kopplungselement (2) relativ zu einer Blasstation (33) mit mindestens zwei Kavitäten zur Behälterformung positioniert wird.

7. Verfahren nach einem der Ansprüche 1 bis 6, **dadurch gekennzeichnet, daß** im Bereich von in einer Transportrichtung nacheinander folgenden Übergabeeinrichtungen abwechselnd Kopplungselemente (2) unterschiedlicher Gestaltung derart verwendet werden, daß im Bereich der einen Kopplungselemente (2) die Tragelemente (39) gegen ein Herausziehen aus der Halterungsaufnahme (9) gesichert gehaltert werden und daß im Bereich der anderen Kopplungselemente (2) ab einer definierten Krafteinwirkung ein Herausziehen der Tragelemente (39) aus der Halterungsaufnahme (9) durchgeführt wird.

8. Verfahren nach einem der Ansprüche 1 bis 7, **dadurch gekennzeichnet, daß** im Bereich mindestens eines Kopplungselementes (2) eine Halterung der Tragelemente (39) derart erfolgt, daß eine Positionsänderung aufeinanderfolgender Tragelemente (39) relativ zueinander ermöglicht wird.

9. Verfahren nach einem der Ansprüche 1 bis 8, **dadurch gekennzeichnet, daß** innerhalb einer Halterungsaufnahme (9) der Kopplungselemente (2) die Tragelemente (39) gegenüber einem Verdrehen gesichert angeordnet werden.

10. Vorrichtung zum Transport von Tragelementen (39) innerhalb einer Einrichtung zur Blasformung von Behältern (13) aus einem thermoplastischen Material, die mindestens eine Blasstation (33) mit mindestens einer Blasform (34) aufweist, die aus mindestens zwei von Trägern gehalterten Blasformsegmenten ausgebildet ist sowie bei der die Tragelemente das thermoplastische Material mindestens entlang eines Teiles eines zu durchlaufenden Transportweges haltern und die mindestens ein Kopplungselement zur lösbaren Halterung der Tragelemente ausweist, **dadurch gekennzeichnet, daß** das Kopplungselement (2) mindestens ein federelastisch gelagertes Halteelement (5) aufweist, das mindestens bereichsweise eine Halterungsaufnahme (9) des Kopplungselementes (2) begrenzt und das relativ zu einem Grundkörper (4) des Kopplungselementes (2) von einem Schwenkgelenk (6) gelagert ist, das relativ zu einer Einführungsflanke des Halteelementes (5) einen seitlichen Versatz aufweist.

11. Vorrichtung nach Anspruch 10, **dadurch gekennzeichnet, daß** das Halteelement (5) von einer Druckfeder (14) federelastisch beaufschlagt ist.

12. Vorrichtung nach Anspruch 10 oder 11, **dadurch gekennzeichnet, daß** die Druckfeder (14) innerhalb einer Führung angeordnet ist.

13. Vorrichtung nach einem der Ansprüche 10 bis 12, **dadurch gekennzeichnet, daß** das Halteelement (5) als ein relativ zum Grundkörper (4) verschwenkbar angeordneter Arm ausgebildet ist.

14. Vorrichtung nach einem der Ansprüche 10 bis 13, **dadurch gekennzeichnet, daß** der seitliche Versatz des Schwenkgelenkes (6) relativ zur Einführungsflanke des Halteelementes (5) derart gewählt ist, daß bei einer Zugbeaufschlagung eines innerhalb des Kopplungselementes (2) gehalterten Tragelementes (39) eine Kraftbeaufschlagung des Halteelementes (5) derart vorgegeben ist, daß eine das Halteelement (5) in die Verschlußpositionierung drückende Kraftkomponente realisiert ist.

15. Vorrichtung nach einem der Ansprüche 10 bis 14, **dadurch gekennzeichnet, daß** für eine Positionierung des Halteelementes (5) relativ zum Grundkörper (4) eine Kurvensteuerung vorgesehen ist.

16. Vorrichtung nach einem der Ansprüche 10 bis 15, **dadurch gekennzeichnet, daß** das Kopplungselement (2) mit mindestens zwei verschwenkbar gelagerten Halteelementen (5) ausgestattet ist.

17. Vorrichtung nach Anspruch 16, **dadurch gekennzeichnet, daß** die Halteelemente (5) in vertikaler Richtung übereinander und mit einem Abstand relativ zueinander angeordnet sind.

18. Vorrichtung nach Anspruch 16, **dadurch gekennzeichnet, daß** die Halteelemente (5) mit ihren jeweiligen Einführflanken auf einander gegenüberliegenden Seiten der Halterungsaufnahme (9) angeordnet sind.

19. Vorrichtung nach einem der Ansprüche 10 bis 18, **dadurch gekennzeichnet, daß** das Halteelement (5) zur Vorgabe einer Endlage einen Anschlag (18) aufweist.

20. Vorrichtung nach einem der Ansprüche 11 bis 19, **dadurch gekennzeichnet, daß** die Druckfeder (14) von einer Kappe (16) abgedeckt ist, die in Richtung einer Längsachse der Druckfeder (14) verschieblich angeordnet ist und die eine mit dem Halteelement (5) verbundene Umlenkrolle (17) beaufschlagt.

21. Vorrichtung nach einem der Ansprüche 10 bis 20, **dadurch gekennzeichnet, daß** der Grundkörper (4) im Bereich der Halterungsaufnahme (9) zur Längsfixierung des Tragelementes (39) ein Aufnahmeprofil (21) aufweist.

22. Vorrichtung nach einem der Ansprüche 10 bis 21, **dadurch gekennzeichnet, daß** mindestens eines der Kopplungselemente (2) mit einem mechanischen Betätigungselement zur mechanischen Öffnung von Halteelementen (5) eines weiteren Kopplungselementes (2) versehen ist.

## Claims

1. A process for transporting carrier elements within a device for blow moulding containers (13) from a thermoplastic material, by means of this device containers being made by the action of blowing pressure from a parison (1) brought to the correct temperature, and a container contour being predetermined by at least two blowing mould segments within a blowing station (33), and in which process the thermoplastic material is held by the carrier element for the purpose of material transport at least along part of a transport path to be covered, and in which the carrier element is detachably connected to a coupling element, **characterised in that** the detachable connection between the carrier element (39) and the coupling element (2) is created such that at least one resiliently mounted holding element (5) of the coupling element (2) may be moved out of a rest position by the carrier element (39) and, after the carrier element (39) has been introduced into a holding receiver (9) of the coupling element (2), is returned to the rest position as a result of the resilient mounting.

2. A process according to Claim 1, **characterised in that**, on being urged by the carrier element (39) out of the holding receiver (9), the holding element (5) is urged with a force component in the direction of positioning in the rest position.

3. A process according to Claim 1 or 2, **characterised in that**, when the carrier element (39) is introduced into the coupling element (2), a rolling movement of a guide roll (11) is transformed into an opening movement of the holding element (5).

4. A process according to one of Claims 1 to 3, **characterised in that** the coupling element (2) is moved together with a transfer device on a closed transport path.

5. A process according to one of Claims 1 to 4, **characterised in that** the coupling element (2) is moved together with a rotating blowing wheel (53).

6. A process according to one of Claims 1 to 5, **characterised in that** the coupling element (2) is positioned relative to a blowing station (33) having at least two cavities for the moulding of containers.

7. A process according to one of Claims 1 to 6, **characterised in that** coupling elements (2) of different shapes are used in alternation in the region of transfer devices succeeding one another in a direction of transport such that, in the region of the one coupling elements (2), the carrier elements (39) are held so that they cannot be withdrawn from the holding receiver (9), and that, in the region of the other coupling elements (2), once a defined force action is reached the carrier elements (39) are withdrawn from the holding receiver (9).

8. A process according to one of Claims 1 to 7, **characterised in that** in the region of at least one coupling element (2) the carrier elements (39) are held such that a change in position of successive carrier elements (39) relative to one another is made possible.

9. A process according to one of Claims 1 to 8, **characterised in that** within a holding receiver (9) of the coupling elements (2) the carrier elements (39) are arranged so that they cannot twist.

10. A device for transporting carrier elements (39) within a device for blow moulding containers (13) from a thermoplastic material, which has at least one blowing station (33) having at least one blowing mould (34) which is constructed from at least two blowing mould segments held by carriers, in which device the carrier elements hold the thermoplastic material at least along part of a transport path to be covered, and which has at least one coupling element for detachably holding the carrier elements, **characterised in that** the coupling element (2) has at least one resiliently mounted holding element (5) which at least in certain regions delimits a holding receiver (9) of the coupling element (2) and is mounted relative to a basic body (4) of the coupling element (2) by a pivotal articulation means (6) which is laterally offset relative to an introduction edge of the holding element (5).

11. A device according to Claim 10, **characterised in that** the holding element (5) is urged resiliently by a compression spring (14).

12. A device according to Claim 10 or 11, **characterised in that** the compression spring (14) is arranged within a guide.

13. A device according to one of Claims 10 to 12, **characterised in that** the holding element (5) is constructed as an arm arranged to be pivotal relative to the basic body (4).

14. A device according to one of Claims 10 to 13, **characterised in that** the lateral offset of the pivotal articulation means (6) relative to the introduction edge of the holding element (5) is selected such that, when a carrier element (39) held within the coupling element (2) is urged in the manner of traction, a force urges the holding element (5) in predetermined manner such that a force component pressing the holding element (5) into the closing position is produced.

15. A device according to one of Claims 10 to 14, **characterised in that** a cam control is provided for positioning the holding element (5) relative to the basic body (4).

16. A device according to one of Claims 10 to 15, **characterised in that** the coupling element (2) is equipped with at least two pivotally mounted holding elements (5).

17. A device according to Claim 16, **characterised in that** the holding elements (5) are arranged one above the other in the vertical direction and at a spacing relative to one another.

18. A device according to Claim 16, **characterised in that** the holding elements (5) are arranged with their respective introduction edges on mutually opposing sides of the holding receiver (9).

19. A device according to one of Claims 10 to 18, **characterised in that** the holding element (5) has a stop (18) for predetermining an end position.

20. A device according to one of Claims 11 to 19, **characterised in that** the compression spring (14) is covered by a cap (16) which is arranged to be displaceable in the direction of a longitudinal axis of the compression spring (14) and urges a deflection roller (17) connected to the holding element (5).

21. A device according to one of Claims 10 to 20, **characterised in that** the basic body (4) has in the region of the holding receiver (9) a receiving profile (21) for longitudinally fixing the carrier element (39).

22. A device according to one of Claims 10 to 21, **characterised in that** at least one of the coupling elements (2) is provided with a mechanical actuating element for mechanically opening holding elements (5) of a further coupling element (2).

## Revendications

1. Procédé pour le transport d'éléments de support dans une installation pour le moulage par soufflage de récipients (13) en un matériau thermoplastique, à l'aide duquel sont préparés, à partir d'un préformé (1) tempéré, des récipients par action de la pression de soufflage, et où un contour de récipient est donné par au moins deux segments de moules de soufflage dans une station de soufflage (33), et où le matériau thermoplastique est fixé par un élément de support au moins le long d'une partie de la voie de transport à parcourir pour le transport de matériau, et où l'élément de support est relié de manière amovible à un élément de couplage, **caractérisé en ce que** la liaison amovible entre l'élément de support (39) et l'élément de couplage (2) est réalisée de sorte que au moins un élément d'appui (5) tenu d'une manière résiliente de l'élément de couplage (2) peut être manoeuvré à partir d'une position de repos de l'élément de support (39) et après l'introduction de l'élément de support (39) dans un guide de fixation (9) de l'élément de couplage (2), se remet en position de repos en raison du positionnement résilient.

2. Procédé selon la revendication 1, **caractérisé en ce que** l'élément d'appui (5) est admis lors de l'admission par l'élément de support (39), en partant du guide de fixation (9) avec une composante de force en direction d'un positionnement en position de repos.

3. Procédé selon la revendication 1 ou 2, **caractérisé en ce que** lors de l'introduction de l'élément de support (39) dans l'élément de couplage (2), un mouvement de roulement d'un rouleau de guidage (11) est transformé en un mouvement d'ouverture de l'élément d'appui (5).

4. Procédé selon l'une quelconque des revendications 1 à 3, **caractérisé en ce que** l'élément de couplage (2) est déplacé ensemble avec un dispositif de remise sur une voie de transport fermée.

5. Procédé selon l'une quelconque des revendications 1 à 4, **caractérisé en ce que** l'élément de couplage (2) est déplacé avec une roue de soufflage (53) en rotation.

6. Procédé selon l'une quelconque des revendications 1 à 5, **caractérisé en ce que** l'élément de couplage (2) est positionné par rapport à une station de soufflage (33) avec au moins deux cavités pour le moulage de récipients.

7. Procédé selon l'une quelconque des revendications 1 à 6, **caractérisé en ce que** dans la zone de dispositifs de remise se succédant dans une direction de transport, à tour de rôle des éléments de couplage (2) de conception différentes sont utilisés de sorte qu'au niveau de chaque élément de couplage (2), les éléments de support (39) sont fixés de manière verrouillée par rapport à une extraction du guide de fixation (9) et au niveau des autres éléments de couplage (2), par l'action d'une force définie, une extraction des éléments de support (39) du guide de fixation (9) est effectué.

8. Procédé selon l'une quelconque des revendications 1 à 7, **caractérisé en ce qu'**au niveau d'au moins un élément de couplage (2), une fixation des éléments de support (39) est réalisée de sorte qu'un changement de position des éléments de support (39) successifs est permis l'un par rapport à l'autre.

9. Procédé selon l'une quelconque des revendications 1 à 8, **caractérisé en ce qu'**à l'intérieur d'un guide de fixation (9) des éléments de couplage (2), les éléments de support (39) sont disposés de manière verrouillée par rapport à une rotation.

10. Dispositif pour le transport d'éléments de support (39) à l'intérieur d'un dispositif de moulage par soufflage de récipients (13) en un matériau thermoplastique, qui présente au moins une station de soufflage (33) avec au moins un moule de soufflage (34), qui est composé d'au moins deux segments de moule de soufflage fixés par des supports, et où les éléments de support fixent le matériau thermoplastique au moins le long d'une partie de la voie de transport à parcourir et qui présente au moins un élément de couplage pour fixer de manière amovible, les éléments de support, **caractérisé en ce que** l'élément de couplage (2) présente au moins un élément d'appui (5) tenu de manière résiliente, limitant au moins en partie un guide de fixation (9) de l'élément de couplage (2) et par rapport à un corps de base (4) de l'élément de couplage (2), est positionné par une articulation de traînée confondue (6), présentant par rapport à un flanc de guidage de l'élément d'appui (5) un déplacement latéral.

11. Dispositif selon la revendication 10, **caractérisé en ce que** l'élément d'appui (5) est muni d'un ressort d'appui (14) résilient.

12. Dispositif selon la revendication 10 ou 11, **caractérisé en ce que** le ressort d'appui (14) est disposé à l'intérieur d'un guide.

13. Dispositif selon l'une quelconque des revendications 10 à 12, **caractérisé en ce que** l'élément d'appui (5) est présenté comme un bras disposé de façon pivotable par rapport au corps de base (4).

14. Dispositif selon l'une quelconque des revendications 10 à 13, **caractérisé en ce que** le déplacement latéral de l'articulation de traînée confondue (6) par rapport à un flanc de guidage, l'élément d'appui (5) a été choisi de sorte que lors d'une admission en traction d'un élément de support (39) fixé à l'intérieur de l'élément de couplage (2), une admission de force de l'élément d'appui (5) est donnée de sorte qu'une composante de force poussant l'élément d'appui (5) en positionnement de fermeture est réalisée.

15. Dispositif selon l'une quelconque des revendications 10 à 14, **caractérisé en ce qu'**un réglage courbe est prévu pour le positionnement de l'élément d'appui (5) par rapport au corps de base (4).

16. Dispositif selon l'une quelconque des revendications 10 à 15, **caractérisé en ce que** l'élément de couplage (2) est pourvu d'au moins deux éléments d'appui (5) disposés de façon pivotable.

17. Dispositif selon la revendication 16, **caractérisé en ce que** les éléments d'appui (5) sont disposés en direction verticale, l'un sur l'autre et avec un écart par rapport à eux-mêmes.

18. Dispositif selon la revendications 16, **caractérisé en ce que** les éléments d'appui (5) sont disposés avec leurs flancs de guidages correspondants sur les côtés faisant face du guide de fixation (9).

19. Dispositif selon l'une quelconque des revendications 10 à 18, **caractérisé en ce que** l'élément d'appui (5) dispose d'un arrêt pour marquer la position finale.

20. Dispositif selon l'une quelconque des revendications 11 à 19, **caractérisé en ce que** le ressort d'appui (14) est couvert d'une coiffe (16), est disposée de manière amovible en direction d'un axe longitudinal du ressort d'appui (14) et qui admet la poulie de renvoi (17) reliée à l'élément d'appui (5).

21. Dispositif selon l'une quelconque des revendications 10 à 20, **caractérisé en ce que** le corps de base (4) présente au niveau du guide de fixation (9) pour une fixation longitudinale de l'élément de support (39) un profil de guidage (21).

22. Dispositif selon l'une quelconque des revendications 10 à 21, **caractérisé en ce qu'**au moins un des éléments de couplage (2) avec un élément de manipulation mécanique pour l'ouverture mécanique d'éléments d'appui (5), est pourvu d'un autre élément de couplage (2).
